# EUROPÄISCHE PATENTANMELDUNG

(11) **EP 0 735 231 A2**
(43) Veröffentlichungstag der Anmeldung: **02.10.1996**
(21) Anmeldenummer: 96104100.1
(22) Anmeldetag: 15.03.1996
(51) Int. Cl.: E21B 7/30

(54) **Vorrichtung zum Rammen von Rohren oder zum Aufweiten von Pilotbohrungen oder Ersetzen erdverlegter Rohrleitungen**

(30) Priorität: 31.03.1995 DE 19512602
(71) Anmelder: TRACTO-TECHNIK PAUL SCHMIDT SPEZIALMASCHINEN, 57368 Lennestadt (DE)
(72) Erfinder: Hesse, Alfons, 57368 Lennestadt (DE)
(74) Vertreter: König, Reimar, Dr.-Ing.

(57) **Zusammenfassung**

Die Erfindung betrifft eine Vorrichtung zum Rammen von Rohren bzw. Gestängen, Aufweiten von Pilotbohrungen oder Ersetzen erdverlegter Rohrleitungen, die eine an den Umgebungswiderstand angepaßte Vortriebssteuerung durch ein relativ zu einem Schlagkopf axial bewegliches und durch ein Zug- oder Druckelement kraftschlüssig mit dem Schlagkopf verbundenes Schlaggerät erlaubt.

## Beschreibung

Die Erfindung betrifft eine Vorrichtung zum Rammen von Rohren oder zum Aufweiten von Pilotbohrungen oder Ersetzen erdverlegter Rohrleitungen.

Derartige Vorrichtungen werden beispielsweise zum horizontalen Einrammen von Rohren oder zum zerstörenden Ersetzen von im Erdreich verlegten Rohrleitungen eingesetzt. Aus der europäischen Patentschrift 0 053 480 ist eine Vorrichtung bekannt, die dazu dient, eine Rohrleitung zu zerstören, um ein Ersatzrohr in der gleichzeitig aufgeweiteten Erdbohrung zu verlegen.

Derartige Vorrichtungen, auch Rammbohrgeräte genannt, bestehen in der Regel aus einem Schlagkopf, einen zylindrischen Gehäuse mit einem Schlagkolben und einer Schlauchverbindung zu einem Kompressor. Die selbsttätige unterirdische Vorwärtsbewegung des Rammbohrgeräts wird durch die in der Regel pneumatisch gesteuerte axiale Schlagkolbenbewegung bewirkt.

Bekannte Rammbohrgeräte besitzen jedoch den Nachteil, daß ein Vorantreiben in Abhängigkeit vom dem Vortrieb entgegenwirkenden Bodenwiderstand nicht möglich ist. Auch beim Zerstören alter Rohrleitungen treten während der Vorwärtsbewegung erhebliche Unterschiede im durch das Rammbohrgerät zu überwindenden Widerstand auf. Trifft dieses beispielsweise auf Rohrabschnitte, die bereits Risse aufweisen, resultiert daraus ein wesentlich geringerer Berstwiderstand als in Bereichen intakter Rohrleitungen. Da der Schlagkolben des Rammbohrgerätes unabhängig vom Umgebungswiderstand (ungeregelt) arbeitet, findet auch in diesen Abschnitten eine unverminderte Schlagtätigkeit und damit eine unkontrollierte Vorwärtsbewegung des Rammbohrgerätes statt. Besonders nachteilig ist die ungeregelte Schlagtätigkeit bei der Verwendung eines Zugseils, mit dem das Rammbohrgerät durch eine alte Rohrleitung oder zum Aufweiten von Pilotbohrungen durch das Erdreich gezogen wird. Dies führt in der Praxis dazu, daß sich das Rammbohrgerät in Abschnitten geringen Widerstands schneller vorwärts bewegt, als das Zugseil gezogen wird, wobei das Zugseil häufig überfahren und zerstört wird.

Bei der Verwendung von Gestängen anstelle eines Zugseiles besteht die Gefahr, daß das Rammbohrgerät bei geringen Spalt- bzw. Verdrängungs- oder Rammwiderständen gegen das Gestänge schlägt und damit Schäden am Gestänge selber oder an dessen Zugaggregat entstehen läßt.

Ein weiterer Nachteil besteht darin, daß es bei geringem Widerstand zu Prellschlägen kommt.

Ein weiterer Nachteil bekannter Geräte resultiert aus deren pneumatischem Antrieb. Dieser erfordert aufgrund der antriebsbedingten Abluft eine offene Bauweise des Geräts. Während des pneumatischen Schlagens wird die schmierölhaltige Abluft an die Umgebung des Rammbohrgerätes abgegeben und verschmutzt so das umgebende Erdreich und die Atmosphäre. Gleichzeitig ist das Rammbohrgerät aufgrund der offenen Bauweise nicht gegen Eindringen von Umgebungswasser geschützt, wodurch ein Einsatz im Wasser ausgeschlossen ist.

Der Erfindung liegt somit das Problem zugrunde, eine Vorrichtung zu schaffen, die einen an den Umgebungswiderstand angepaßten Vortrieb, insbesondere beim Zerstören von Rohrleitungen oder beim Aufweiten von Pilotbohrungen erlaubt.

Der Lösung des Problems liegt der Gedanke zugrunde, eine seilgezogene oder gestängegezogene Vorrichtung mit einem Schalter zu versehen, der einen dynamischen Zusatzantrieb nur ab einem bestimmten Mindestwiderstand zuschaltet.

Im einzelnen wird das Problem durch einen Schlagkopf, einem relativ zum Schlagkopf axial beweglichen selbstgetriebenen Schlaggerät und einem beispielsweise von einem Altrohr oder vom Erdreich ausgehenden Umgebungswiderstand betätigten Schalter zur Steuerung des Schlaggeräts gelöst. Dabei verbindet ein Zug- oder Druckelement, beispielsweise eine Zugstange oder ein Zugseil über den Schalter kraftschlüssig das Schlaggerät und den Schlagkopf.

Der Schalter ist in diesem Zusammenhang so zu sehen, daß durch Vorspannen der Schlageinheit die Fluidzufuhr oder Abfuhrbohrung geöffnet wird und dadurch die Tätigkeit des Schlagwerkes beginnt.

Die erfindungsgemäße Vorrichtung ermöglicht eine betriebssichere Kombination von statischem und dynamischem Vortrieb. Das mittels Zugseil und Winde oder Zuggestänge arbeitende statische Aufweiten wird so phasenweise von einem zuschaltbaren Schlagantrieb unterstützt. Die erfindungsgemäße Vorrichtung ermöglicht einen sicheren Betrieb unter Vermeidung eines unkontrolliert vorauseilenden Schlaggeräts. Die Problematik des durch das Schlaggerät überfahrenen Zugseils wird infolge des sich bei fehlendem oder geringem Umgebungswiderstand automatisch ausschaltenden Schlagantrieb ausgeschlossen. Dazu ist das Seil nicht, wie in üblicher Weise mit dem Schlagkopf, sondern beispielsweise mit dem Schlaggerät verbunden. Die seilvermittelte Vorwärtsbewegung des Schlaggerätes wird dann durch die erhöhte Zugkraft des Seils in Bereichen großen auf den Schlagkopf wirkenden Umgebungswiderstands infolge einer axialen Verschiebung des Schlaggerätes bezüglich des Schlagkopfes und den dann durch den Schalter ausgelösten Schlagantrieb unterstützt. Der Schlagantrieb schaltet sich zu, wenn der auf den Schlagkopf wirkende Umgebungswiderstand einen bestimmten Schwellenwert überschreitet und damit den entgegenwirkenden Schaltwiderstand überwindet. Sobald der Umgebungswiderstand bei der weiteren Vorwärtsbewegung diesen Schwellenwert unterschreitet, wird der Schalter entlastet, mit der Folge eines Abschaltens des Schlagantriebs.

Durch gezielte Wahl des Schalterwiderstands läßt sich der Schwellenwert für das Zuschalten des Schlagantriebs je nach Einsatzbedingungen frei wählen. So können selbst bei geringem Umgebungswiderstand Leerschläge des Schlagantriebs sicher vermieden und dennoch bei plötzlich auftretenden erhöhten Widerständen eine ungehinderte Vorwärtsbewegung gewährleistet werden.

Besonders vorteilhaft ist die Verwendung der erfindungsgemäßen Vorrichtung mit einem hydraulischen Schlagantrieb bzw. -gerät.

Einem hydraulischen Antrieb sind ein hoher Wirkungsgrad und eine kurze Bauweise zueigen. Die kurze Bauweise verringert die erforderlichen Startgrubenausmaße.

Des weiteren bietet die Verwendung eines hydraulischen Antriebs den Vorteil, daß die beim pneumatischen Antrieb austretende Abluft entfällt, da ein hydraulischer Antrieb grundsätzlich als geschlossenes System vorliegt. Die durch die ölhaltige Abluft pneumatischer Geräte bedingte Verschmutzung des Erdreichs und der Atmosphäre und einer eventuell nachgezogenen neuen Rohrleitung wird somit vermieden.

Die erfindungsgemäße Vorrichtung eignet sich in hydraulischer Ausführung daher besonders zum Einziehen von Trinkwasserleitungen, da die betreffenden Rohre als geschlossenes System eingezogen werden können, wodurch eine Kontamination des Rohrinneren ausgeschlossen ist. Wegen des Wegfalls der Abluft läßt sich nämlich der Schlagkopf oder das Schlagrohr so mit einem Rohr verbinden, daß es keine Öffnungen gibt, in die Verunreinigungen eindringen könnten.

Das Anwendungsspektrum wird durch die geschlossene Bauweise erheblich erweitert; ein Einsatz im Grundwasser ohne Kontamination des Grundwassers und ohne Eindringen des Grundwassers in das Gerät, ein Einsatz im Winter, ohne Vereisungen der offenen Mechanik infolge der sich entspannenden Druckluft und der Einsatz mit Kunststoffrohren, die durch die bei pneumatischen Geräten mit der Abluft austretenden Ölnebel beschädigt werden können, ist problemlos durchzuführen.

Schließlich sind hydraulische Geräte wesentlich startfreudiger als pneumatische Geräte, was sich vor allem bei dem durch den sich ändernden Umgebungswiderstand häufigen Wechsel von Aus- und Einschalten des Schlagantriebs bei der erfindungsgemäßen Vorrichtung als großer Vorteil erweist.

Bei der erfindungsgemäßen Anwendung muß beim Einsatz als Berstlininggerät, wenn als Startschacht ein Kontrollschacht des Abwassersystems dient, ca. alle 80 m angehalten werden, um ein neues Vortriebsrohr anzubringen. Besonders für diesen Fall bringt diese Erfindung wesentliche Vorteile, da beim Abschalten der Zugkraft das Schlaggerät direkt abschaltet, ohne einen Nachlauf, wie er bei den bisher üblichen Rammbohrgeräten auftritt.

Beim Einsatz eines Zugelements für das statische Aufweiten von Pilotbohrungen werden üblicherweise hydraulische Winden verwendet. Der hydraulische Schlagantrieb erlaubt dann die Verwendung einer gemeinsamen Kraftstation für die Winde und den Schlagantrieb, der dann über einen Kopfschlauch von der Winde her mit dem Druckmittel versorgt werden kann.

Die Erfindung wird im folgenden anhand eines in der Zeichnung erläuterten Ausführungsbeispiels des näheren beschrieben. In der Zeichnung zeigen:

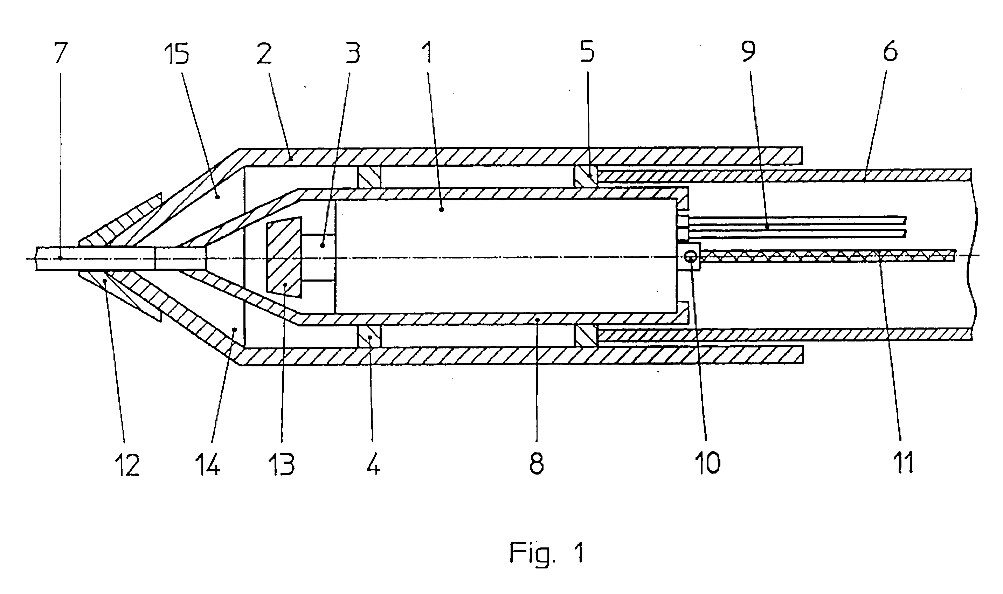

- Fig. 1: einen axialen Längsschnitt einer Vorrichtung zum Aufweiten von Pilotbohrungen bzw. zum zerstörenden Ersetzen erdverlegter Altrohre und zum Einziehen einer Rohrleitung;
- Fig. 2: eine Vorrichtung mit einem Schubrohrantrieb;
- Fig. 3: eine Vorrichtung zum Zerstören erdverlegter Altrohre;
- Fig. 4: eine andere Vorrichtung zum Zerstören erdverlegter Altrohre;
- Fig. 5: eine Vorrichtung zum Rammen von Rohren in die Erde;
- Fig. 6: eine weitere Vorrichtung zum Zerstören erdverlegter Altrohre.

Die erfindungsgemäße Vorrichtung besteht aus einem hydraulischen Schlaggerät 1, einem Schlagkopf 2, einem im Schlaggerät befindlichen Schalter mit einem nach außen geführten Stößel 3 zum Zu- oder Abschalten des Schlaggeräts, einem Gleitring 4 zum Führen des Schlaggeräts 1, einem Anschlagring 5 zum Verschließen eines einzuziehenden Rohres 6, einem Adapter 7 mit einem vorderen Teil zum Befestigen eines Zugseils und einem hinteren Teil 8 zum Verbinden des Adapters mit dem Schlaggerät 1, einer Ver- und Entsorgungsleitung 9 des Schlaggeräts 1, einem Anschlagauge 10 zum Befestigen eines Zugseils 11 zum Zurückziehen der Vorrichtung entgegen der Vortriebsrichtung, einem Vorsatzkopf 12 zum Anpassen des Schlagkopfes an die jeweilige Funktion und einem an dem Stößel 3 anliegenden Widerlager 13 zum Übertragen des Umgebungswiderstandes auf den Schalter im Schlaggerät 1.

Der hintere Teil des Adapters 8 ist ohne Kraftschluß durch Bohrungen 14 und 15 des Schlagkopfes 2 geführt und greift direkt an dem Schlaggerät 1 an, das über den Gleitring 4 und den als Gleitring ausgebildeten Anschlagring 5 axial verschiebbar im Schlagkopf 2 gelagert ist. Zwischen der Stirnseite des Schlaggeräts 1 und dem Widerlager 13 des Schlagkopfes 2 ist der Stößel 3 des die Arbeitsphasen des Schlaggeräts bestimmenden Schalters angeordnet, der über das Schlaggerät 1 mittelbar durch die am vorderen Teil des Adapters 7 über das Zugseil wirksamen Zugkraft betätigt wird. Dabei wird das Schlaggerät 1 oberhalb eines unteren Schwellenwerts ein- und unterhalb dieses Schwellenwerts wieder ausgeschaltet.

Die Verbindung des Zugseils zu dem Schlagantrieb 1 mittels des Adapters 7,8 kann im hinteren Teil des Adapters 8 durch ein schlagabsorbierendes Element gedämpft sein.

Vorteilhaft ist ein Sender 16 im Schlagkopf 2 zum Feststellen der Position der Vorrichtung mit Hilfe eines oberirdischen Empfängers.

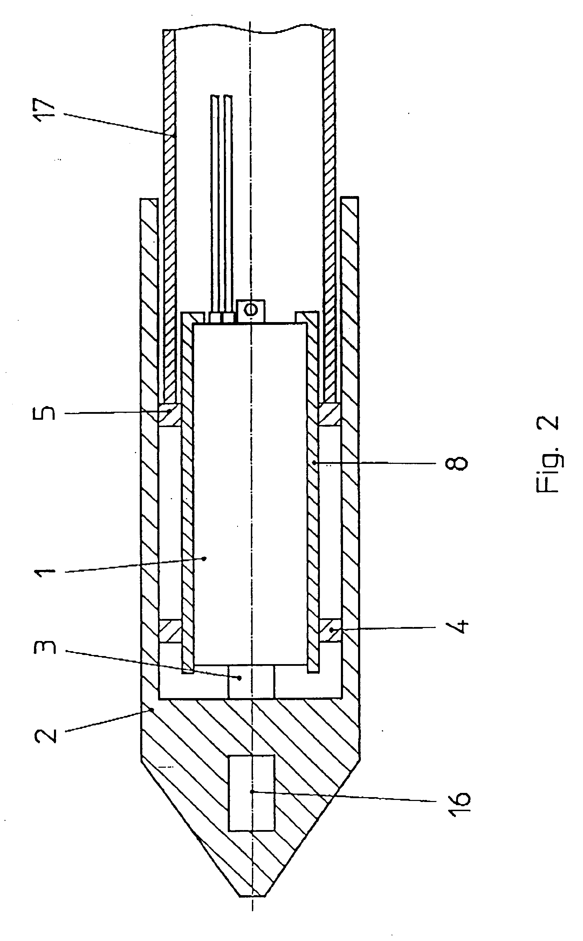

In einer besonderen Ausführungsform wird die Vorrichtung mittels eines Schubrohres 17 beispielsweise durch eine Pilotbohrung bewegt. Dabei wirkt das freie Rohrende über den Anschlagring 5 auf das Schlaggerät 1 zur Betätigung des Schalters im Falle des Über- oder Unterschreitens des vorgegebenen Schwellenwertes in der Weise, daß die Schubkraft des Rohres 6 ein axiales Verschieben des Schlaggerätes 1 in Relation zum Schlagkopf 2 bewirkt und dadurch den Schalter im Schlaggerät 1 über den Stößel 3 betätigt (Figur 2).

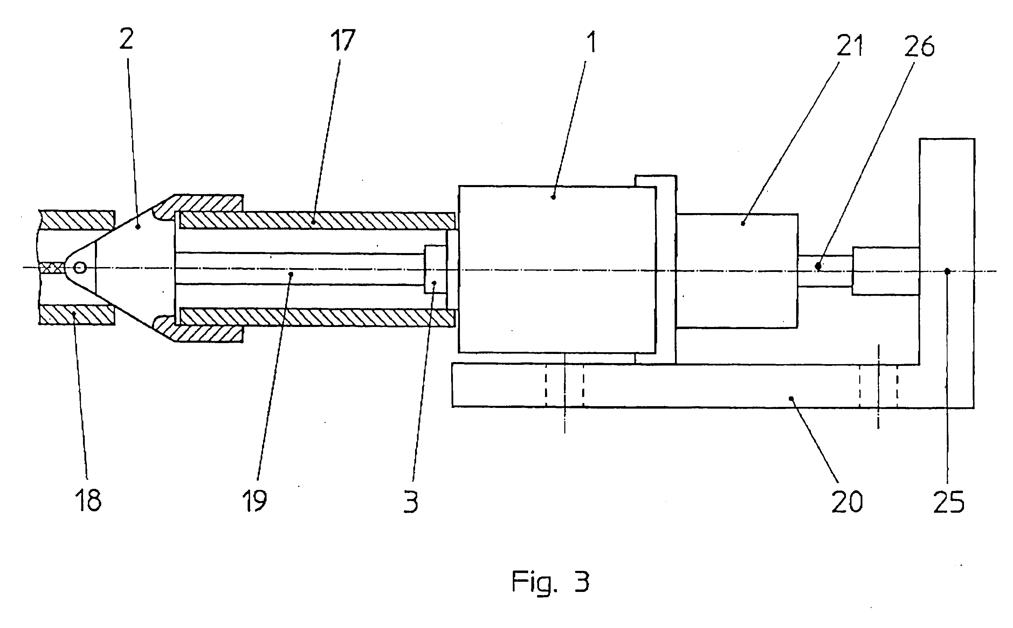

Bei einer Vorrichtung zum Zerstören erdverlegter Rohre befindet sich das Rohr 17 zwischen dem Schlaggerät 1 und einem mit nicht dargestellten Messern besetzten, als Berstkopf ausgebildeten Schlagkopf 2 zum Zerstören eines Altrohres 18 (Figur 3). Der Stößel 3 ist dabei mit einer Druckstange 19 verbunden, die innerhalb des Rohres 17 verläuft und den auf den Berst- bzw. Schlagkopf 2 wirkenden Umgebungswiderstand auf den Schalter des Schlaggeräts 1 überträgt und beim Über- oder Unterschreiten des Schwellenwertes den Schalter betätigt.

Das Schlaggerät 1 befindet sich dabei auf einer Lafette 20 mit einem Schlitten 21, zwischen dem und einem Widerlager 25 sich ein Schubzylinder 26 für den Vorschub des Schlaggerätes befindet.

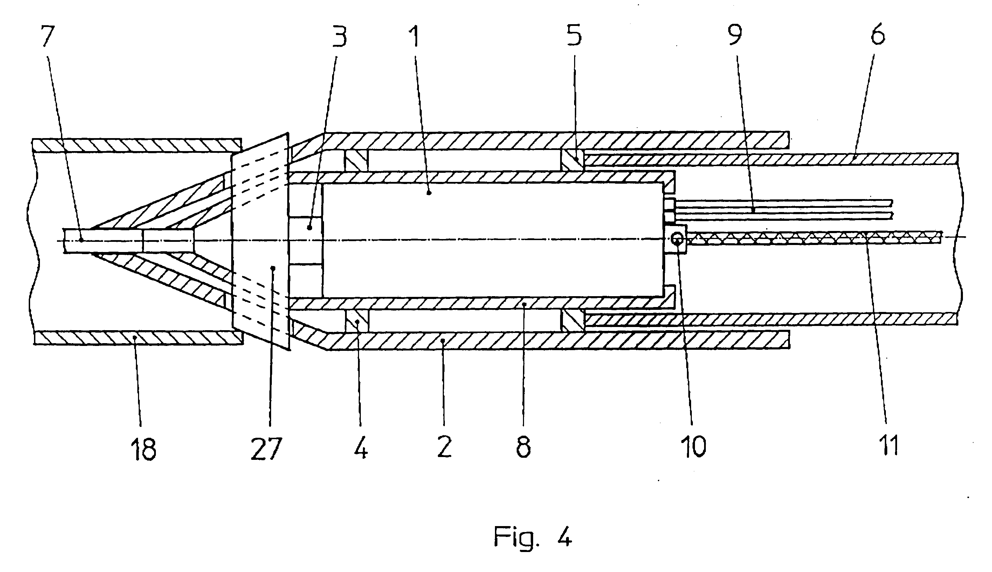

Wie in Figur 4 dargestellt kann ein Werkzeug 27 zum Zerstören eines Altrohres 18 in den Schlagkopf 2 eingesetzt sein und dann direkt auf den Stößel 3 wirken. In diesem Fall ist der Adapter ohne Kraftschluß durch das Werkzeug 27 geführt.

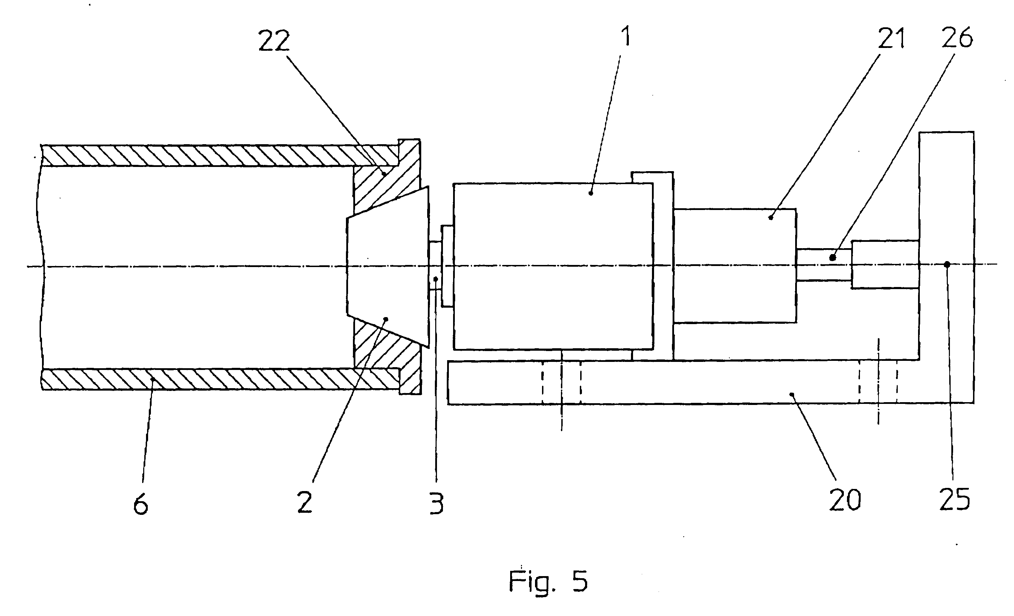

Mit einem Rohradapter 22 kann die Vorrichtung auch zum Eintreiben von Rohren verwendet werden. Dabei befindet sich der Rohradapter 22 auf dem Schlagkopf 2. Auch in diesem Fall wird der Schlagantrieb 1 beim Überschreiten eines bestimmten Schwellendrucks hinzugeschaltet (Figur 5).

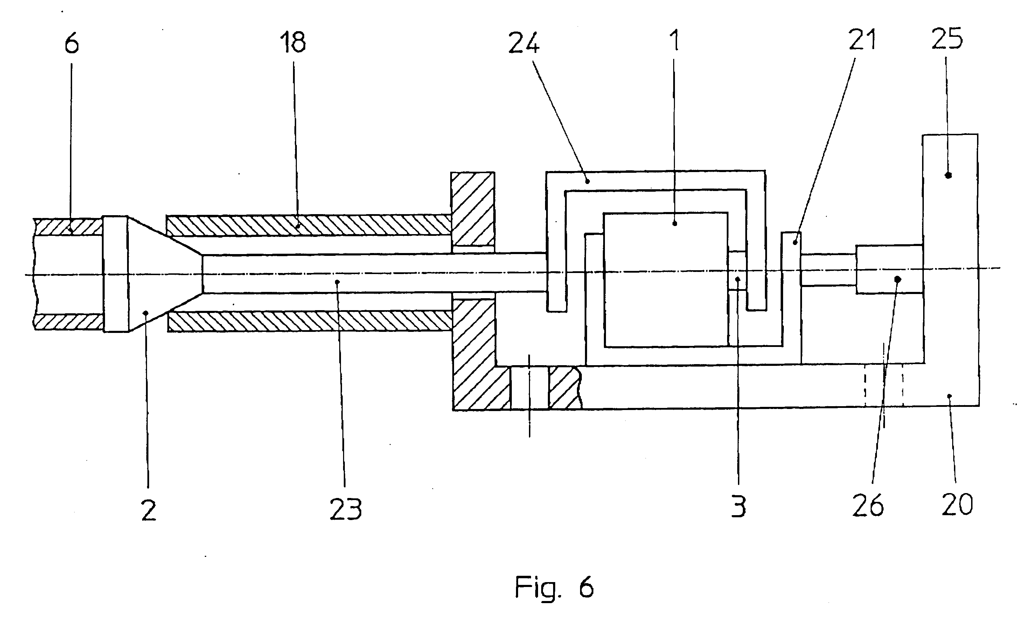

Bei der Vorrichtung gemäß Figur 6 befindet sich das Schlaggerät 1 in einer Zielgrube und ist über eine Zugstange 23 mit einem in einer Startgrube befindlichen Schlagkopf 2 in Gestalt eines Berstkopfes zum Zerstören eines Altrohres 18 und zum Einziehen eines Neurohres 6 verbunden. Die Zugstange 23 kann beispielsweise über ein das Schlaggerät übergreifendes U-Stücks 24 mit dem Stößel 3 verbunden sein. Die Vortriebskraft wird über die mit dem Schlagkopf verbundene Zugstange 23 und das U-Stück 24 vom Schlaggerät 1 über den Schalterstößel 3 auf den Schlagkopf 2 übertragen.

## Patentansprüche

1. Vorrichtung zum Rammen von Rohren oder zum Aufweiten von Pilotbohrungen oder Ersetzen von Rohrleitungen mit
- einem Schlagkopf (2),
- einem relativ zum Schlagkopf (2) axial beweglichen selbstgetriebenen Schlaggerät (1),
- einem das Schlaggerät (1) und den Schlagkopf (2) über einen Schalter kraftschlüssig verbindendes Zug- oder Druckelement (3, 19, 23, 24)

2. Vorrichtung nach Anspruch 1, gekennzeichnet durch einen hydraulischen Schlagantrieb (1).

3. Vorrichtung nach Anspruch 1 oder 2, dadurch gekennzeichnet, daß der Schlagkopf (2) ein Widerlager (13) für einen Stößel (3) des Schalters besitzt.

4. Vorrichtung nach einem der Ansprüche 1 bis 3, dadurch gekennzeichnet, daß ein Zugseil über einen Adapter (7,8) mit dem Schlaggerät (1) verbunden ist.

5. Vorrichtung nach einem der Ansprüche 1 bis 4, dadurch gekennzeichnet, daß der Adapter (7,8) ohne Kraftschluß durch Bohrungen (14,15) im Schlagkopf (2) geführt ist.

6. Vorrichtung nach einem der Ansprüche 1 bis 5, dadurch gekennzeichnet, daß das Schlaggerät (1) auf Gleitringen (4,5) im Schlagkopf (2) gelagert ist.

7. Vorrichtung nach einem der Ansprüche 1 bis 6, gekennzeichnet durch ein an einem der Gleitringe (5) befestigtes Nachziehrohr (6).

8. Vorrichtung nach einem der Ansprüche 1 bis 7, gekennzeichnet durch eine das Schlaggerät (1) mit dem Schlagkopf (2) verbindende Zug- oder Druckstange (19).

9. Vorrichtung nach Anspruch 8, gekennzeichnet durch eine am Schlagkopf (2) angreifende Zugstange (23) und ein in der Zielgrube befindliches Schlaggerät (1).

10. Vorrichtung nach Anspruch 8, dadurch gekennzeichnet, daß sich ein Rohr (6) zwischen dem Schlagkopf (2) und dem Schlaggerät (1) befindet und innerhalb des Rohres eine Druckstange (19), eine kraftschlüssige Verbindung zwischen Schlagkopf und Schlaggerät herstellt.

11. Vorrichtung nach einem der Ansprüche 1 bis 10, gekennzeichnet durch ein U-förmiges Verbindungsstück (24) zwischen der Zugstange (23) und dem Stößel (3).

12. Vorrichtung nach einem der Ansprüche 1 bis 11, gekennzeichnet durch einen auf dem Schlagkopf (2) befindlichen Rohradapter (22).

13. Vorrichtung nach einem der Ansprüche 1 bis 12, gekennzeichnet durch einen im Schlagkopf (2) befindlichen Sender (16).
